# EUROPEAN PATENT APPLICATION

(11) **EP 1 947 350 A2**
(43) Date of publication of application: **23.07.2008**
(21) Application number: 08100416.0
(22) Date of filing: 14.01.2008
(51) Int. Cl.: F15B 1/26

(54) **Hydraulic reservoir with baffle**

(30) Priority: 19.01.2007 US 655698
(71) Applicant: Delphi Technologies, Inc., Troy, Michigan 48007 (US)
(72) Inventor: Wong, Albert Cheuk-Yin, Saginaw, MI 48604 (US); Paris, Johnny M., Clio, MI 48420 (US); Sanderson, Rod M., Midland, MI 48642 (US)
(74) Representative: Denton, Michael John

(57) **Abstract**

A hydraulic fluid reservoir assembly (120) is disclosed. The reservoir assembly (120) includes a reservoir housing (124) defining a fluid chamber (128) and a baffle member (62). The baffle member (62) is disposed within the fluid chamber (128) above the inlet (130) and defines a central opening (68) disposed radially inwardly of the reservoir housing (124). The central opening (68) provides fluid communication between an inlet zone (128b) below the baffle (62) and an upper zone (128a) above the baffle (62). The hydraulic fluid introduced through the inlet (130) is directed to flow circumferentially along a radially outer section of the inlet zone (128b) whereby air entrained in the hydraulic fluid collects in a central portion (88) of the inlet zone (128b) and is communicated to the upper zone (128a) thereby deaerating the fluid. A means for forming a substantially fluid tight seal (70, 90, 94, 96) between the reservoir housing (124) and the baffle member (62) is provided along an outer radial edge of the baffle member (62). A method of manufacture is also disclosed.

## Description

### TECHNICAL FIELD

The present invention relates to hydraulic reservoirs and, more particularly, to a hydraulic reservoir having a baffle.

### BACKGROUND OF THE INVENTION

Many vehicles have hydraulic power assisted steering systems. Such systems typically include a reservoir. Hydraulic reservoirs are typically used to perform a number of functions such as holding a quantity of hydraulic fluid for supplying a hydraulic pump and conditioning the hydraulic fluid. The conditioning of the hydraulic fluid often involves cooling the fluid, deaerating the fluid and/or filtering the fluid. Increasing the volume of the hydraulic fluid held within the reservoir is one option for enhancing most of these reservoir functions. In modem motor vehicles, however, the available space in the engine compartment is often limited and it is generally desirable to minimize the weight of the vehicle, both factors which favor the use of smaller reservoirs. Various reservoir designs, including reservoirs with internal baffle structures have been developed in an effort to address these competing design criteria. While many known reservoir designs are adequate, they are not without limitations and drawbacks.

The manufacture of some reservoir designs is known to result in a relatively high variability in the deaeration performance of the reservoirs. An improved reservoir that is not subject to such high variability in performance and which is also relatively simple and inexpensive to manufacture is desirable.

### SUMMARY OF THE INVENTION

The present invention provides a hydraulic reservoir that is relatively simple and inexpensive to manufacture and which provides enhanced performance characteristics.

The invention comprises, in one form thereof, a reservoir assembly for use with a hydraulic fluid. The reservoir assembly includes a reservoir housing defining a fluid chamber for holding the hydraulic fluid. The housing includes an inlet through which hydraulic fluid enters the fluid chamber and an outlet through which hydraulic fluid is discharged from the fluid chamber. A baffle member is disposed within the fluid chamber above the inlet and partitions the fluid chamber. The baffle member separates an upper zone of the fluid chamber positioned above the baffle member from an inlet zone of the fluid chamber positioned below the baffle member. The baffle member defines a central opening disposed radially inwardly of the reservoir housing which provides fluid communication between the inlet zone and the upper zone. The baffle member and the reservoir housing define a flow path wherein hydraulic fluid introduced into the fluid chamber through the inlet is substantially directed to flow circumferentially along a radially outer section of the inlet zone whereby air entrained in the hydraulic fluid collects in a central portion of the inlet zone proximate the central opening and is subsequently communicated to the upper zone thereby deaerating the fluid. The assembly further includes a means for forming a substantially fluid tight seal between the reservoir housing and the baffle member along an outer radial edge of the baffle member.

In some embodiments of the invention, the means for forming a substantially fluid tight seal between the reservoir housing and the baffle member takes the form of an axially extending flange disposed on the outer radial edge of the baffle member which is in a press-fit engagement with the reservoir housing. In other embodiments of the invention, the means for forming a substantially fluid tight seal may take the form of an O-ring member, a weld extending along the outer circumference of the baffle member and joining the baffle member to the reservoir housing, or an adhesive disposed between and joining the baffle member and reservoir housing.

The invention comprises, in another form thereof, a method of mass producing a reservoir assembly for use with hydraulic fluid. The method includes providing a plurality of reservoir housings wherein each of the reservoir housings define a fluid chamber for holding hydraulic fluid and include an inlet through which hydraulic fluid enters the fluid chamber and an outlet through which hydraulic fluid is discharged from the fluid chamber. The method also involves installing a baffle member in each of the reservoir housings. For each of the reservoir assemblies, the baffle member is disposed in the fluid chamber above the inlet, the baffle member partitioning the fluid chamber and thereby separating an upper zone of the fluid chamber positioned above the baffle member from an inlet zone of the fluid chamber positioned below the baffle member. The baffle member defines a central opening disposed radially inwardly of the reservoir housing and which provides fluid communication between the inlet zone and the upper zone. The baffle member and the reservoir housing define a flow path wherein fluid introduced into the fluid chamber through the inlet is substantially directed to flow circumferentially along a radially outer section of the inlet zone whereby air entrained in the hydraulic fluid collects in a central portion of the inlet zone proximate the central opening and is subsequently communicated to the upper zone thereby deaerating the hydraulic fluid. The method also includes forming a substantially fluid tight seal between the baffle member and the reservoir housing along the outer radial edge of the baffle member for substantially all of the plurality of reservoir housings.

An advantage of the present invention is that it provides a cost-efficient hydraulic reservoir design for reliably deaerating hydraulic fluid.

### BRIEF DESCRIPTION OF THE DRAWINGS

The above mentioned and other features of this invention, and the manner of attaining them, will become more apparent and the invention itself will be better understood by reference to the following description of an embodiment of the invention taken in conjunction with the accompanying drawings, wherein:
Figure 1 is a cross sectional view of a reservoir housing without a baffle.
Figure 2 is a perspective view of a prior art baffle member.
Figure 3 is another perspective view of the prior art baffle member of Figure 2.
Figure 4 is a perspective view of a second prior art baffle member.
Figure 5 is a another perspective view of the second prior art baffle member.
Figure 6 is a cross sectional view of a hydraulic reservoir assembly in accordance with the present invention.
Figure 7 is a cut-away perspective view of the hydraulic reservoir assembly of Figure 6.
Figure 8 is a partial cross sectional view of an alternative embodiment that employs an O-ring between the baffle member and reservoir housing.
Figure 9 is a partial cross sectional view of an alternative embodiment that employs a weld between the baffle member and reservoir housing.
Figure 10 is a partial cross sectional view of an alternative embodiment that employs an adhesive between the baffle member and reservoir housing.

Corresponding reference characters indicate corresponding parts throughout the several views. Although the exemplification set out herein illustrates an embodiment of the invention, in one form, the embodiment disclosed below is not intended to be exhaustive or to be construed as limiting the scope of the invention to the precise form disclosed.

### DESCRIPTION OF THE PREFERRED EMBODIMENT

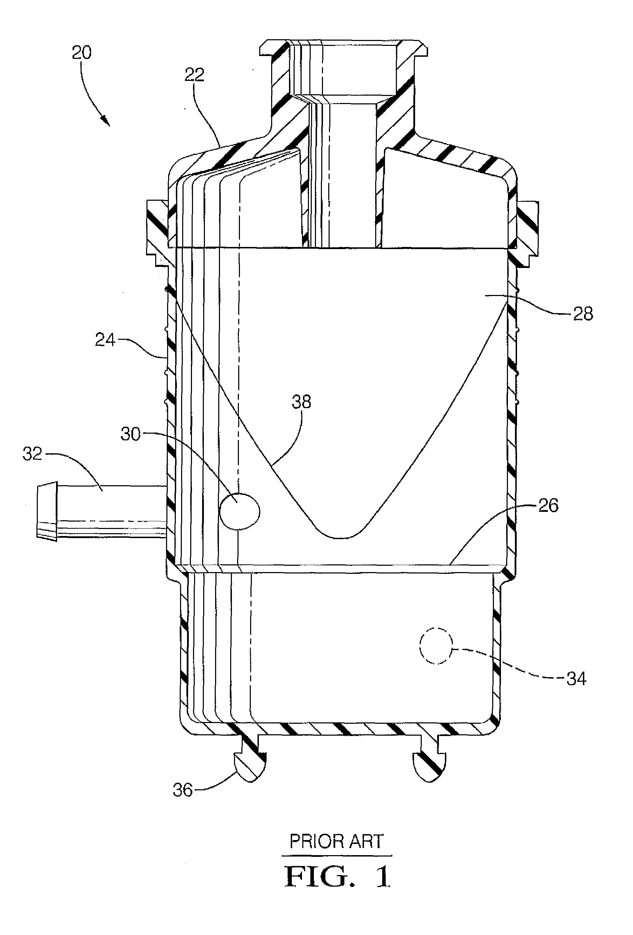

A reservoir housing 20 without a baffle member located therein is illustrated in Figure 1. Reservoir housing 20 includes a top member 22 and a housing 24 that defines an interior fluid chamber 28. A cap (not shown) is removably secured to top member 22 to open and close the central opening defined by top member 22. Housing 24 has a generally cylindrical shape with the lower portion of housing 24 having a slightly smaller diameter than the upper portion of housing 24. A small interior ledge 26 is formed at the transition between the upper and lower portions of housing 24.

Hydraulic fluid enters fluid chamber 28 of reservoir 20 through inlet 30. A connector 32 in fluid communication with inlet 30 projects outwardly from housing 24. A hydraulic hose can be readily secured to connector 32 when installing reservoir 20 in a hydraulic system. Hydraulic fluid is discharged from fluid chamber 28 through outlet 34 which is positioned below inlet 30. Outlet 34 is located in the cut-away portion of housing 24 and a dashed outline is used to indicate the location of the outlet 34. A second connector (not shown) is in communication with outlet 34 and projects outwardly from housing 24 forming a substantially right angle with connector 32. The second connector is similar in structure to connector 32. Mounting studs 36 project from the bottom of reservoir housing 24 and are used to secure reservoir 20 in a vehicle.

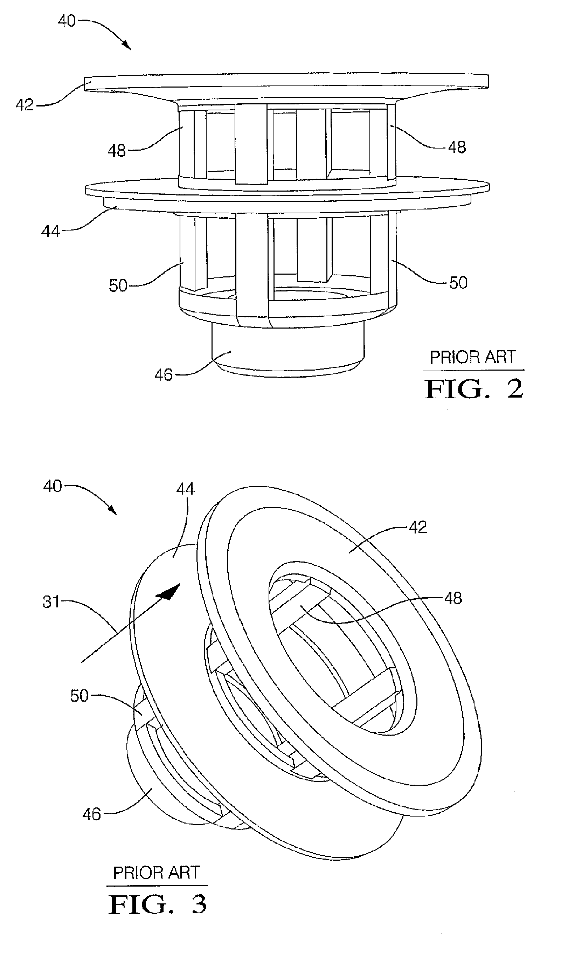

In operation, inlet 30 is positioned so that hydraulic fluid enters housing 24 at a tangent to the axis of cylindrical fluid chamber 28. (Flow path line 31 in Figure 3 illustrates a fluid flow entering at a tangent to the central axis.) Consequently, the hydraulic fluid within fluid chamber 28 flows in a circular path about the axis of fluid chamber 28 when fluid is entering reservoir 20. This rotary fluid motion can result in a vortex as exemplified by line 38 which illustrates the fluid surface of the hydraulic fluid within reservoir 20 when inflowing fluid has created a vortex. The presence of such a vortex is undesirable in the reservoir and can impair the performance of the reservoir. For example, such a vortex results in turbulence near the upper surface of the fluid and thereby inhibits the deaeration of the fluid and may even result in the entrainment of air within the hydraulic fluid. Outlet 34 is also located at a tangent to the axis of cylindrical fluid chamber 28 and the discharge of fluid through outlet 34 may also contribute to the formation of a vortex, however, it is thought that the inflow of hydraulic fluid through the return line connected to inlet 30 is the primary cause of the vortex.

It is known to inhibit the formation of such vortexes by the use of baffles. Two known examples of such baffles are illustrated in Figures 2-5. The first of these known baffle structures 40 is shown in Figures 2 and 3 and includes an upper baffle member 42 and a lower baffle member 44. Both of the baffle members 42, 44 are generally planar and the outer circumferences of these two members 42, 44 are positioned adjacent the inner surface of the reservoir when baffle structure 40 is installed in reservoir 20. In use, the fluid level in reservoir 20 is above upper baffle member 42 and as incoming fluid 31 enters reservoir 20 through inlet 30 it generates a rotating flow of fluid between baffle members 42, 44. The heavier fluid within the rotating flow migrates radially outward and the air trapped within the rotating fluid collects in the center of the reservoir where it is communicated upwardly through a central opening in upper baffle member 42. Connecting columns extend between the upper and lower baffle members 42, 44 and extend below lower baffle member 44 to a cup-shaped bottom structure 46. Heavy debris may collect in bottom structure 46 and screen panels (not shown) extend across the openings formed between the lower column sections 50 which extend between baffle member 44 and bottom structure 46. After entering the reservoir between baffle members 42, 44, the fluid flows downwardly through the central opening in lower baffle member 44. The fluid is then filtered as it passes through the screen panels mounted on lower column sections 50 before it can reach outlet 34 and be discharged from reservoir 20.

When mass produced, it has been found that a significant number of baffle structures 40 will perform poorly. Observation of baffle structures 40 in use by the inventor of the present application indicates that an unacceptably high level of turbulence occurs on the upper surface of fluid in the reservoir (above upper baffle member 42) in the poorly performing reservoir assemblies. The inventor further realized that when manufacturing reservoir assemblies having a baffle structure 40, it is difficult to consistently provide a fluid tight seal between upper baffle member 42 and reservoir housing 24. The absence of such a fluid tight seal between upper baffle member 42 and reservoir housing 24 is thought to allow the rotary motion of fluid below baffle member 42 to be partially communicated to fluid above baffle member 44 resulting in the performance degrading turbulence.

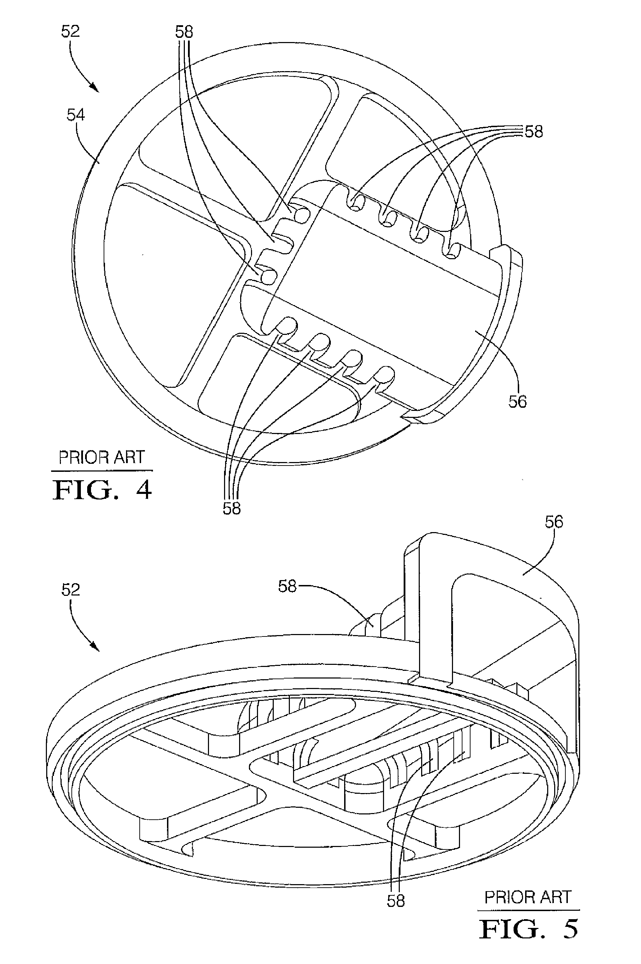

Figures 4 and 5 illustrate another known reservoir baffle structure 52. This structure is quite different and provides an outer ring 54 with a shroud 56 to control the flow of fluid entering the reservoir. Outer ring 54 supports shroud 56 adjacent an inlet to the reservoir and incoming fluid enters shroud 56 where its velocity is dampened before it flows out of shroud 56 through one of the openings 58 located in the side panels of shroud 56 or through the open bottom of shroud 56.

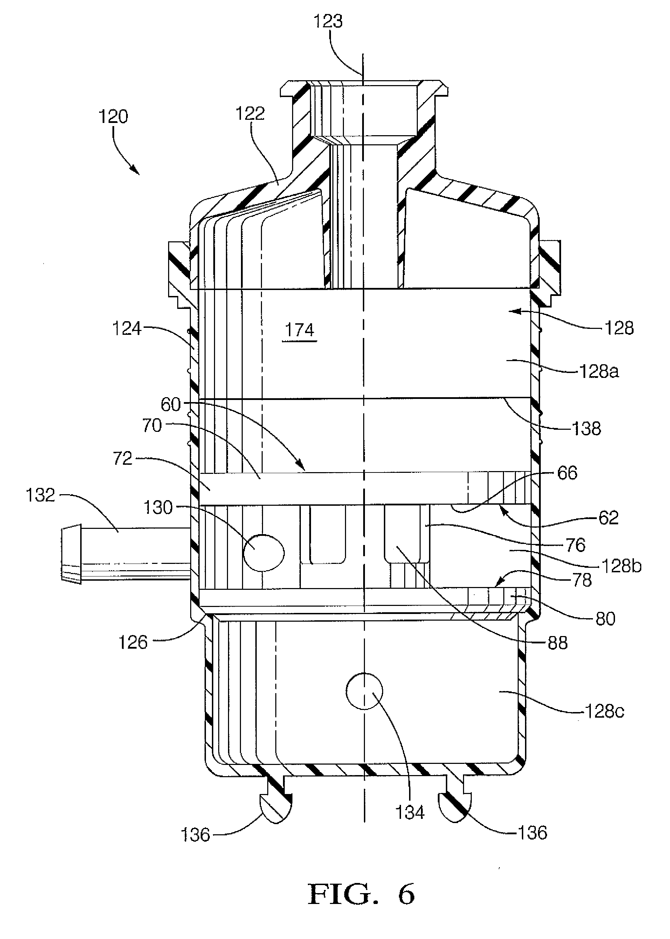

Figure 6 illustrates a reservoir assembly 120 in accordance with the present invention. Reservoir assembly 120 includes a top member 122 and a housing 124 that defines an interior fluid chamber 128. Housing 124 and top member 122 may be readily manufactured by molding a polymeric material. A cap (not shown) is removably secured to top member 122 to open and close the central opening defined by top member 122. Hydraulic fluid may be readily added to the system through the central opening in top member 122. Housing 124 has a generally cylindrical shape with the lower portion of housing 124 having a slightly smaller diameter than the upper portion of housing 124. A small interior ledge 126 is formed at the transition between the upper and lower portions of housing 124. As discussed below, ledge 126 provides a surface for engaging baffle structure 60 when it is inserted into housing 124. In alternative embodiments, housing 124 may have a common diameter throughout its axial length and other means may be provided for properly axially positioning baffle structure 60 within housing 124. For example, small inwardly projecting tabs could be formed in housing 124 for engagement by baffle structure 60, a removeable jig could be employed or a positioning member could be integrally formed on baffle structure 60 and project therefrom for engaging a feature on housing 124.

Hydraulic fluid enters fluid chamber 128 of reservoir assembly 120 through inlet 130. A connector 132 in fluid communication with inlet 130 projects outwardly from housing 124. Connector 132 may be readily inserted into a hydraulic hose when installing reservoir assembly 120 in a hydraulic system. Hydraulic fluid is discharged from fluid chamber 128 through outlet 134 which is positioned below inlet 130. A second connector (not shown) is in communication with outlet 134 and projects outwardly from housing 124. The second connector has a structure similar to that of inlet connector 132 and can also be readily inserted into a hydraulic hose when installing reservoir assembly 120 in a hydraulic system. Mounting studs 136 project from the bottom of reservoir housing 124 and are used to secure reservoir assembly 120 in a vehicle.

Inlet 130 is positioned so that hydraulic fluid enters housing 124 along a line that defines a tangent with respect to a cylinder centered on axis 123 of reservoir housing 124. See flow path arrow 31 in Figure 3 for a graphical illustration of one example of such a tangentially oriented incoming fluid flow. In the illustrated embodiment, outlet 134 is positioned so that it defines a flow path that intersects axis 123 and thereby limits or eliminates the contribution of outlet 134 to the formation of a rotating fluid flow within housing 124. Alternative positioning of outlet 134, however, may also be employed with the present invention. For example, outlet 134 could be positioned similarly to the tangentially located outlet 34 of Figure 1.

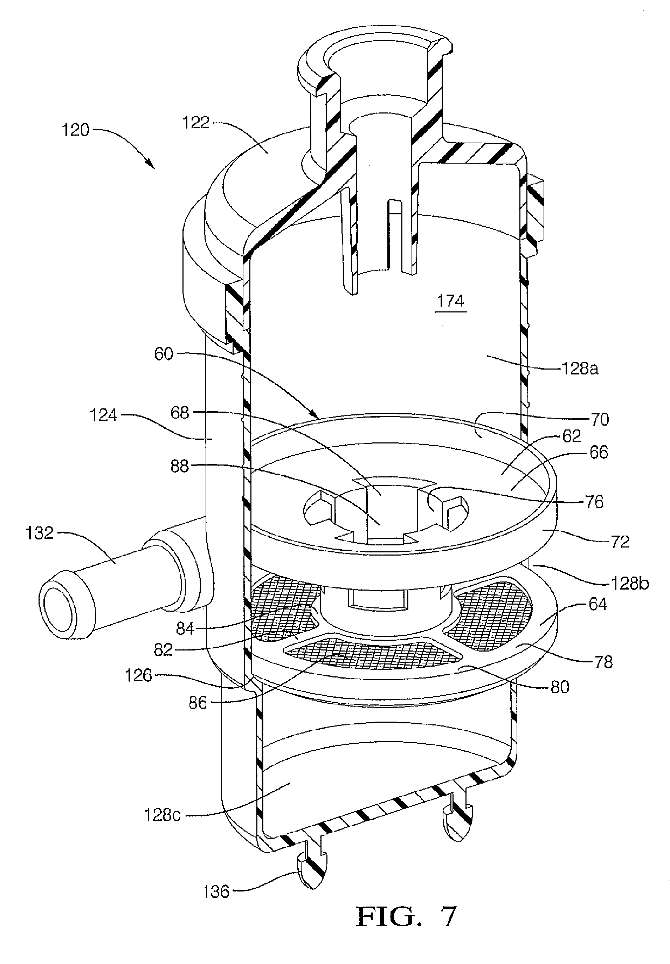

A baffle structure 60 is also positioned in fluid chamber 128 and is best understood with reference to Figures 6 and 7. When in use, fluid chamber 128 is partially filled with hydraulic fluid. The volume of fluid to be contained within fluid chamber 128 will depend upon the characteristics of the hydraulic system in which reservoir assembly 120 is installed. Reservoir assembly 120 will be sized so that the upper surface of the hydraulic fluid, indicated by line 138 in Figure 6 is above baffle structure 60. Baffle structure 60 partitions fluid chamber 128 into three separate zones, an upper zone 128a located above baffle member 62, an inlet zone 128b positioned between baffle member 62 and filter element 64 and a lower zone 128c positioned below filter element 64.

Baffle member 62 has a substantially planar disk portion 66 with a central opening 68 extending through disk portion 66 and an outer flange 70. Flange 70 extends around the outer circumference of disk portion 66 and projects in an axial direction. The use of flange 70 provides baffle member 66 with a relatively large radially outer surface 72. Connecting members 76 extend axially and join baffle member 62 with filter element 64. Baffle member 62, connecting members 76 and filter element support structure 78 are, in the illustrated embodiment, all integrally formed of a molded polymeric material.

Filter element support structure 78 includes an inner disk 84 to which connecting members 76 are joined. Inner disk 84 forms an impermeable barrier at the center of filter element 64. Supporting ribs 82 project radially outwardly from inner ring 84 and join inner ring 84 with outer ring 80. Mesh filter elements 84 extend across the fluid passageways formed between inner and outer rings 84, 80 and radially extending ribs 82.

Baffle structure 60 is installed in reservoir housing 124 before attaching top member 122. In the embodiment illustrated in Figures 6 and 7, baffle structure 60 is simply positioned within housing 124. Outer flange 70 is dimensioned so that it forms a press-fit engagement with interior surface 174 of reservoir housing 124. Baffle structure 60 is pressed downwardly within reservoir housing 124 until outer ring 80 engages interior ledge 126 thereby properly positioning baffle structure 60 within reservoir housing 124. The engagement of outer ring 80 with interior ledge 126 and the press-fit engagement of flange 70 with interior surface 174 prevents the relative motion of baffle structure 60 within reservoir housing 124 during normal operation but does not prevent the manual removal of baffle structure 60 from reservoir housing 124.

The press-fit engagement of polymeric flange 70 with the polymeric reservoir housing 124 is sufficiently tight to provide a fluid tight seal. By providing baffle member 62 with an axially projecting flange 70 on its outer circumference, the outer radial surface located of baffle member 62 is enlarged thereby providing a greater area for surfaces 72 and 174 to be engaged and thereby improving the sealing effect of this engagement. Moreover, the axial projecting nature of flange 70 provides flange 70 with less rigidity at its projecting edge allowing it to more easily conform to the interior surface 174 of reservoir housing 124.

The use of flange 70 on baffle structure 60 facilitates the mass production of reservoir assemblies 124 by providing a design wherein a plurality of reservoir assemblies 124 can be manufactured and substantially all of the plurality of reservoir assemblies 124 will include a substantially fluid tight seal between baffle member 62 and interior surface 174 of reservoir housing 124.

In the illustrated embodiment, flange 70 projects in a direction parallel to axis 123. In alternative embodiments, however, flange 70 could be provided with a slight flare so that it has an increasingly larger outer radius as it projects from disk portion 66. Such a flare would increase the interference fit between flange 70 and interior surface 174 at the projecting end of flange 70 which would be biased radially inwardly by interior surface 174 and thereby enhance the press-fit engagement of flange 70 with interior surface 124 and the fluid tight seal formed between flange 70 and interior surface 124.

The operation of reservoir assembly 120 will now be discussed. Hydraulic fluid enters fluid chamber 128 through inlet 130 substantially tangential with respect to a cylinder centered on axis 123 and within the inlet zone 128b between baffle member 62 and filter element 64. This fluid inflow sets up a rotating flow of fluid within fluid chamber 128 within inlet zone 128b. As a result of the rotating fluid flow, the lighter components of the fluid, most importantly entrained air, migrate toward central area 88 of inlet zone 128b located below and proximate central opening 68 in baffle member 62. The entrained air then migrates upwardly through opening 68 into the upper zone 128a where it enters the air filled head space above hydraulic fluid surface 138 thereby deaerating the hydraulic fluid. The fluid tight seal between flange 70 and interior surface 174 of reservoir housing 124 prevents the communication of fluid motion from inlet zone 128b to upper zone 128a along the outer circumference of fluid chamber 128 where the rotating fluid within inlet zone 128b has its greatest velocity. The fluid in the central area 88 of inlet zone 128b will have a smaller velocity and the presence of connecting members 76 partially partitions inlet zone 128b contributes to the reduced motion of fluid at the center of inlet zone 128b. With regard to the interaction of connecting members 76 and the fluid flow within inlet zone 128b, it is further noted that connecting members form portions of a circular arc centered on axis 123 to thereby minimize any turbulence that such members may produce in the rotating fluid. It is also noted that connecting members 76 have a radially outwardly projecting section at the top of each member 76 so that opening 68 and central zone 88 include not only that portion of inlet zone radially inwardly of connecting members 76 but also a small portion of inlet zone 128b positioned radially outwardly of the axially extending section of connecting members 76. Thus, entrained air can escape through opening 68 from central area 88 of the inlet zone 128b into the upper zone 128a without necessarily having to pass radially inwardly of connecting members 76.

Fluid must pass through mesh filter elements 86 to enter the lower zone 128c of fluid chamber 128 where outlet 134 is located. As the hydraulic system draws fluid from reservoir assembly 120, hydraulic fluid is discharged through outlet 134 drawing additional hydraulic fluid through filter elements 86.

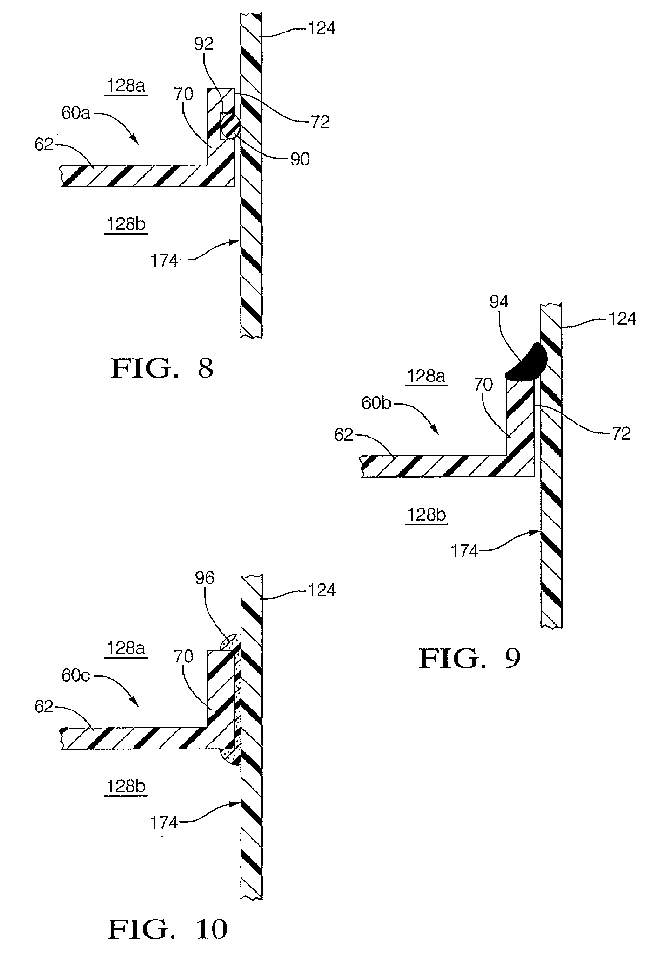

In other embodiments, a fluid tight seal may be formed between the baffle member and the reservoir housing using methods instead of, or in addition to, the press-fit engagement of flange 70 and reservoir housing 124 described above. Several such alternative embodiments are illustrated in Figures 8-10. In Figure 8, baffle structure 60a utilizes an O-ring member 90 located between flange 70 and inner surface 174 of reservoir housing 124. O-ring member 90 is seated in circumferentially extending groove 92 located in flange 70 to seal the interface between the baffle member and reservoir housing but could alternatively be seated in a groove located in reservoir housing 124.

In Figure 9, baffle structure 60b is both sealed and secured to the reservoir housing by welding. Weld bead 94 extends for substantially the entire circumference of flange 70 and both joins and seals flange 70 with reservoir housing 124. In Figure 10, an adhesive 96 is applied to the outer radial surface of flange 70 before baffle structure 60c is installed in reservoir housing 124. Adhesive layer 96 both secures and seals baffle flange 70 to the inner surface 174 of reservoir housing 124. The use of such additional sealing features as illustrated in Figures 8-10 further increase the reliability of achieving a substantially fluid tight seal between baffle member 62 and interior surface 174 of reservoir housing 124 when mass producing reservoir assemblies 120.

While this invention has been described as having an exemplary design, the present invention may be further modified within the spirit and scope of this disclosure. This application is therefore intended to cover any variations, uses, or adaptations of the invention using its general principles.

## Claims

1. A reservoir assembly (120) for use with a hydraulic fluid, said assembly comprising:
a reservoir housing (124) defining a fluid chamber (128) for holding the hydraulic fluid, said housing (124) further defining an inlet (130) through which hydraulic fluid enters said fluid chamber (128) and an outlet (134) through which hydraulic fluid is discharged from said fluid chamber (128);
a baffle member (62) disposed within said fluid chamber (128) above said inlet (130), said baffle member (62) partitioning said fluid chamber and thereby separating an upper zone (128a) of said fluid chamber positioned above said baffle member from an inlet zone (128b) of said fluid chamber positioned below said baffle member (62), said baffle member defining a central opening (68) disposed radially inwardly of said reservoir housing (124) and providing fluid communication between said inlet zone (128b) and said upper zone (128a) and wherein said baffle member (62) and said reservoir housing (124) define a flow path wherein hydraulic fluid introduced into said fluid chamber (128) through said inlet (130) is substantially directed to flow circumferentially along a radially outer section of said inlet zone (128b) whereby air entrained in the hydraulic fluid collects in a central portion (88) of said inlet zone (128b) proximate said central opening (68) and is subsequently communicated to said upper zone (128a) thereby deaerating the fluid; and
means for forming a substantially fluid tight seal (70, 90, 94, 96) between said reservoir housing (124) and said baffle member (62) along an outer radial edge of said baffle member (62).

2. The reservoir assembly of claim 1 wherein said means for forming a substantially fluid tight seal comprises a press-fit engagement between said reservoir housing (124) and an axially extending flange (70) projecting from said baffle member (62) along said outer radial edge.

3. The reservoir assembly of claim 1 wherein said means for forming a substantially fluid tight seal comprises an O-ring member (90) disposed between said reservoir housing (124) and said baffle member (62).

4. The reservoir assembly of claim 1 wherein said means for forming a substantially fluid tight seal comprises at least one weld (94) extending along substantially the entire outer circumference of said baffle member (62), said weld (94) joining said baffle member (62) to said reservoir housing (124).

5. The reservoir assembly of claim 1 wherein said means for forming a substantially fluid tight seal comprises an adhesive (96) disposed between and joining said baffle member (62) and said reservoir housing (124).

6. A reservoir assembly (120) for use with a hydraulic fluid, said assembly comprising:
a reservoir housing (124) defining a fluid chamber (128) for holding the hydraulic fluid, said housing (124) further defining an inlet (130) through which hydraulic fluid enters said fluid chamber (128) and an outlet through which hydraulic fluid is discharged from said fluid chamber (128);
a baffle member (62) disposed within said fluid chamber above said inlet (130), said baffle member (62) partitioning said fluid chamber and thereby separating an upper zone (128a) of said fluid chamber positioned above said baffle member (62) from an inlet zone (128b) of said fluid chamber positioned below said baffle member, said baffle member (62) defining a central opening (68) disposed radially inwardly of said reservoir housing (124) and providing fluid communication between said inlet zone (128b) and said upper zone (128a) and wherein said baffle member (62) and said reservoir housing (124) define a flow path wherein hydraulic fluid introduced into said fluid chamber (128) through said inlet (130) is substantially directed to flow circumferentially along a radially outer section of said inlet zone (128a) whereby air entrained in the hydraulic fluid collects in a central portion (88) of said inlet zone (128b) proximate said central opening (68) and is subsequently communicated to said upper zone (128a) thereby deaerating the fluid; and
an axially extending flange (70) circumscribing an outer radial edge of said baffle member (62), said flange (70) and said reservoir housing (124) forming a substantially fluid tight seal between said reservoir housing (124) and said baffle member (62).

7. The reservoir assembly of claim 6 wherein said fluid tight seal between said reservoir housing (124) and said baffle member (62) is formed by a press-fit engagement between said reservoir housing (124) and said flange (70).

8. The reservoir assembly of claim 6 wherein said fluid tight seal between said reservoir housing (124) and said baffle member (62) is formed by an O-ring member (90) disposed between said reservoir housing (124) and said flange (70).

9. The reservoir assembly of claim 6 wherein said fluid tight seal between said reservoir housing (124) and said baffle member (62) is formed by at least one weld (94) extending along substantially the entire outer circumference of said flange (70), said weld (94) joining said flange (70) to said reservoir housing (124).

10. The reservoir assembly of claim 6 wherein said fluid tight seal between said reservoir housing (124) and said baffle member (62) is formed by an adhesive (96) disposed between and joining said flange (70) and said reservoir housing (124).

11. The reservoir assembly of claim 6 further comprising a filter element (64) disposed within said fluid chamber (128) and operably disposed between said inlet (130) and said outlet (134) whereby hydraulic fluid entering said fluid chamber through said inlet passes through said filter element before being discharged through said outlet.

12. The reservoir assembly of claim 11 wherein said filter element (64) is disposed substantially parallel with said baffle member (62), said inlet zone (128a) defines a substantially cylindrical volume and said inlet (130) is positioned to introduce hydraulic fluid along a flow path oriented tangentially with respect to said axis (123).

13. The reservoir assembly of claim 12 further comprising at least one structural member (76) interconnecting said baffle member (62) and said filter element (64) whereby said baffle member (62) and said filter element (64) are installable in said fluid chamber (128) as a single part.

14. The reservoir assembly of claim 13 wherein said reservoir housing (124) defines a radially inwardly projecting ledge (126) for engaging said filter element (64), engagement of said ledge (126) with said filter element (64) determining the position said filter element (126) and said baffle member (62) within said fluid chamber (128) during installation of said filter element (64) and said baffle member (62).

15. A method of mass producing a reservoir assembly (120) for use with hydraulic fluid, said method comprising:
providing a plurality of reservoir housings (124) wherein each of the reservoir housings define a fluid chamber (128) for holding hydraulic fluid, an inlet (130) through which hydraulic fluid enters the fluid chamber and an outlet (134) through which hydraulic fluid is discharged from the fluid chamber;
installing a baffle member (62) in each of the reservoir housings (124) wherein, for each reservoir assembly (120), the baffle member (62) is disposed in the fluid chamber above the inlet (130), the baffle member (62) partitioning the fluid chamber and thereby separating an upper zone (128a) of the fluid chamber positioned above the baffle member (62) from an inlet zone (128b) of the fluid chamber positioned below the baffle member (62), the baffle member (62) defining a central opening (68) disposed radially inwardly of the reservoir housing (124) and providing fluid communication between the inlet zone (128b) and the upper zone (128a) and wherein the baffle member (62) and the reservoir housing (124) define a flow path wherein fluid introduced into the fluid chamber through the inlet is substantially directed to flow circumferentially along a radially outer section of the inlet zone (128b) whereby air entrained in the hydraulic fluid collects in a central portion (88) of the inlet zone (128b) proximate the central opening (68) and is subsequently communicated to the upper zone (128b) thereby deaerating the hydraulic fluid; and
forming a substantially fluid tight seal between the baffle member (62) and the reservoir housing (124) along the outer radial edge of the baffle member (62) for substantially all of the plurality of reservoir housings (124).

16. The method of claim of claim 15 wherein the step of forming a substantially fluid tight seal comprises forming an axially extending flange (70) along the outer circumference of the baffle member (62) and forming the substantially fluid tight seal between the flange (70) and the reservoir housing (124).

17. The method of claim 16 wherein the step of forming a substantially fluid tight seal comprises engaging the flange (70) with the reservoir housing (124) in a press-fit engagement to thereby form the substantially fluid tight seal.

18. The method of claim 15 wherein the step of forming a substantially fluid tight seal comprises disposing an O-ring member (90) between the baffle member (62) and the reservoir housing (124).

19. The method of claim 15 wherein the step of forming a substantially fluid tight seal comprises welding the baffle member to the reservoir housing wherein the weld (94) formed between the baffle member (62) and the reservoir housing (124) extends along substantially the entire outer circumference of the baffle member (62).

20. The method of claim 15 wherein the step of forming a substantially fluid tight seal comprises adhering the baffle member (62) to the reservoir housing (124) with an adhesive (96) along substantially the entire outer circumference of the baffle member (62).

21. The method of claim 15 further comprising:
installing a filter element (64) in the fluid chamber (128) wherein the filter element (64) is operably disposed between the inlet (130) and the outlet (134) whereby hydraulic fluid entering the fluid chamber through the inlet (130) passes through the filter element (64) before being discharged through the outlet (134), and wherein the filter element (64) is disposed substantially parallel with the baffle member (62) to define a substantially cylindrical inlet zone (128b) therebetween.

22. The method of claim 21 further including the step of interconnecting the filter element (64) and the baffle member (62) to form a single part and wherein the steps of installing a baffle member (62) and installing a filter element (64) are simultaneously accomplished by installing the single part.
